# EUROPÄISCHE PATENTSCHRIFT

(11) **EP 2 360 037 B1**
(45) Veröffentlichungstag und Bekanntmachung des Hinweises auf die Patenterteilung: **25.06.2014**
(21) Anmeldenummer: 11150907.1
(22) Anmeldetag: 14.01.2011
(51) Int. Cl.: B60G 15/06, F16F 9/56, F16F 9/58, F16F 13/00

(54) **Federbein**
Suspension strut
Jambe de force

(30) Priorität: 15.02.2010 DE 102010001915
(43) Veröffentlichungstag der Anmeldung: 24.08.2011
(73) Patentinhaber: ZF Friedrichshafen AG, 88038 Friedrichshafen (DE)
(72) Erfinder: Bender, Burkhard, 51570, Windeck (DE)

(56) Entgegenhaltungen:
- EP-A1- 1 829 718
- DE-A1- 19 655 013
- US-A- 5 961 106

## Beschreibung

Die Erfindung betrifft ein Federbein gemäß dem Oberbegriff von Patentanspruch 1.

Die gattungsbildende DE 196 55 013 A1 betrifft ein Kolben-Zylinder-Aggregat in der Bauform eines Federbeins, wobei eine Fahrzeugtragfeder durch eine hydraulische Verstelleinrichtung in ihrer Vorspannung einstellbar ist. Dazu kommt ein Verstellzylinder zur Anwendung, der mit einem Federteller des Federbeins in Wirkverbindung steht. Der Federteller ist an ein Druckversorgungssystem angeschlossen, das wiederum über Fahrzustandssignale gesteuert wird. Mit diesem Kolben-Zylinder-Aggregat bzw. dem gesamten Fahrwerkssystem kann allen Fahrzeugaufbaubewegungen entgegengewirkt werden. Dazu ist allerdings ein erheblicher Systemaufwand notwendig, der nur bei Fahrzeugen der Oberklasse möglich ist.

Neben einer Fahrzeugtragfeder kommt ein an der Kolbenstange fixierter Druckanschlag zur Anwendung, der sich, wie die Fig. 5 zeigt, auf einer Anschlagfläche eines Federtellers abstützt. Die Anschlagfläche ist ortsfest zum Zylinder angeordnet. Ab einer definierten Einfahrposition der Kolbenstange setzt der Druckanschlag auf der Anschlagfläche auf und bewirkt einen Anstieg der Tragkraft, z. B. für einen Fahrzeugaufbau. In dem Zylinder ist mittels mehrerer Sicken eine Kolbenstangenführung fixiert, so dass der Federteller von der Stirnfläche des Zylinders und der Außenseite der Kolbenstangenführung gehalten wird.

Bei einer Kolbenstangenbewegung wird Dämpfmedium in einen Ausgleichsraum verdrängt. Der Ausgleichsraum ist über einen axial beweglichen Trennkolben zu einem Arbeitsraum des Zylinders abgetrennt. Bei der Bemessung des erforderlichen Trennkolbenwegs werden der Hubweg der Kolbenstange und die thermische Ausdehnung des Dämpfmediums herangezogen.

Schon seit geraumer Zeit ist es bekannt, dass man Schwingungsdämpfer kreuzweise miteinander verbindet, d. h. dass ein kolbenstangenseitiger Arbeitsraum eines Schwingungsdämpfers mit einem kolbenstangenfernen Arbeitsraum eines anderen Schwingungsdämpfers verbunden ist. Durch diese Strömungsverbindung wird das bei einer Federungsbewegung verdrängte Dämpfmedium zwischen den Schwingungsdämpfers verschoben, so dass z. B. Roll- oder Nickverbindungen ausgleichbar sind. Auch bei einer derartigen Variante eines Fahrwerkssystems ist ein erheblicher Installatlonsaufwand notwendig, der u. a. ein Grund für die nur geringe Verbreitung dieses Bauprinzips sorgte.

Die Aufgabe der Erfindung besteht darin, ein einfaches Fahrwerkssystem zur Niveauregulierung zu schaffen.

Erfindungsgemäß wird die Aufgabe dadurch gelöst, dass die Verdrängerstangenführung axial beweglich innerhalb des Zylinders gelagert und ab einer definierten Einschubposition der Verdrängerstange die Bewegung des Trennkolbens blockiert ist, so dass ab der definierten Einschubposition das von der Verdrängerstange verdrängte Dämpfmedium eine Axialverschiebung der Kolbenstangenführung bewirkt, wodurch die Anschlagfläche für die Tragfeder verschoben wird.

Der große Vorteil der Erfindung besteht darin, dass jeder Schwingungsdämpfer unabhängig von allen anderen Schwingungsdämpfern seine Funktion ausführen kann und keine Verbindungsleitungen notwendig sind. Jeder Schwingungsdämpfer stellt ein nach außen autarkes und geschlossenes Aggregat dar, das ohne Fremdenergie zur Verstellung des Einsatzpunktes der Tragfeder betrieben werden kann.

Dabei ist vorgesehen, dass der Trennkolben auf einem Anschlag zur Anlage kommt. Grundsätzlich könnte man den Trennkolben auch auf einer Feder oder einem Gaspolster zur Anlage bringen, doch ist ein einfacher mechanischer Anschlag besonders dauerbelastbar.

Um den Anschlag möglichst einfach realisieren zu können, ist vorgesehen, dass der Anschlag vom Zylinder gebildet wird. Denkbar wäre z. B. eine Durchmesserreduzierung im Zylinder, so dass der Trennkolben auf der Durchmesserreduzierung zur Anlage kommt. Alternativ kann man auch einfach einen Anschlagkörper verwenden, der z. B. zwischen einem Boden des Zylinders und dem Trennkolben eingelegt wird.

Im Hinblick auf eine möglichst leichtgängige Verschiebung der Kolbenstangenführung weist die Verdrängerstangenführung zur Innenwandung des Zylinders mindestens einen Gleitring auf.

Um den Schwingungsdämpfer für verschiedene Anwendungen verwenden zu können, ist der Anschlag in seinem Einsatzpunkt einstellbar.

Je nach der Größe des Dämpfmediumvolumens und geforderter Genauigkeit des Einsatzpunktes der Druckfeder wirkt sich das thermische Ausdehnungsverhalten des Dämpfmediums mehr oder weniger störend aus. Um diesen Effekt zu minimieren, wirkt der Anschlag mit einem thermischen Ausgleichselement zusammen, das den Einsatzpunkt des Anschlags verstellt.

Eine denkbare Bauform besteht darin, dass das Ausgleichselement von einer Aufnahme für einen Dehnungskörper gebildet wird, wobei sich der Dehnungskörper auf einer Mitnahmefläche des Anschlags abstützt und eine Federkraft der Verschiebebewegung des Anschlags entgegengerichtet ist.

Alternativ kann das Ausgleichselement von einer Bimetallfeder gebildet werden, auf der sich der Anschlag abstützt. Bei einer Temperaturänderung ändert sich auch die Schirmung der Bimetallfeder, so dass darüber auch der Einsatzpunkt der Anschlagfunktion steuerbar ist.

Anhand der folgenden Figurenbeschreibung soll die Erfindung näher erläutert werden.

Es zeigt:
- Fig. 1: Federbein im Verstellbereich
- Fig. 2: Federbein im Normalhubbereich
- Fig. 3: Ausgleichselement für ein Federbein nach Fig. 1

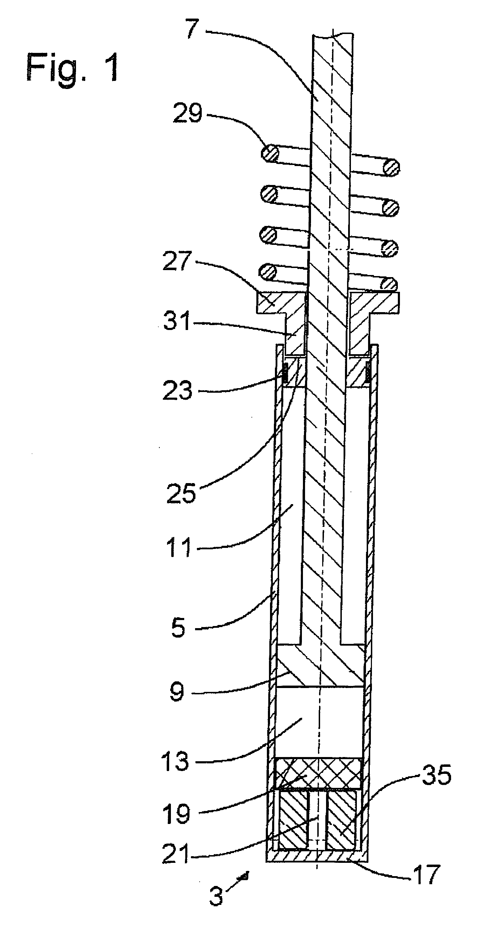

Die Fig. 1 zeigt die schematische Darstellung eines Federbeins 1mit einem als Schwingungsdämpfer 3 in Einrohrausführung, wobei sich die Erfindung nicht diese Bauform beschränkt. Das Federbein weist einen Zylinder 5 auf, in dem eine Verdrängerstange 7 mit einem Kolben 9 axial beweglich angeordnet ist. Der Kolben 9 unterteilt den Zylinder 5 in einen verdrängerstangenseitigen und einen verdrängerstangenfernen Arbeitsraum 11; 13. Ein verdrängerstangenaustrittsseitiges Ende des Zylinders 5 wird von einer Verdrängerstangenführung 15 verschlossen. Zwischen einem Boden 17 des Zylinders 5 und dem verdrängerstangenfernen Arbeitsraum 13 ist ein axial verschiebbarer Trennkolben 19 angeordnet, der ein Gaspolster in einem Ausgleichsraum 21 abdichtet. Die beiden Arbeitsräume 11; 13 sind vollständig mit einem flüssigen Dämpfmedium gefüllt.

Die Verdrängerstangenführung 15 ist innerhalb des Zylinders 5 axial beweglich gelagert. Optional kann die Verdrängerstangenführung 15 zur Innenwandung des Zylinders 5 mindestens einen Gleitring 23 aufweisen, um die Verschiebefunktion zu fördern. Auf einer äußeren Deckfläche 25 der Verdrängerstangenführung 15stützt sich ein Federteller 27 für eine Tragfeder 29 ab. Der Federteller 27 verfügt über eine Führungshülse 31, die sich an der Innenwandung des Zylinders 5 zentriert.

Innerhalb des Ausgleichsraums 21 ist für den Trennkolben 19 ein Anschlag 33 ausgeführt, der von dem Zylinder, z. B. mittels einer Durchmesserreduzierung oder, wie dargestellt, durch einen Anschlagkörper 35 gebildet werden kann. Der Verschiebeweg der Verdrängerstange 7 bestimmt ein Verdrängervolumen, das von dem Produkt aus Verschiebeweg des Trennkolbens multipliziert mit dem Durchmesser des Trennkolbens im Ausgleichsraum 21 im Normalhubbereich ausgeglichen wird.

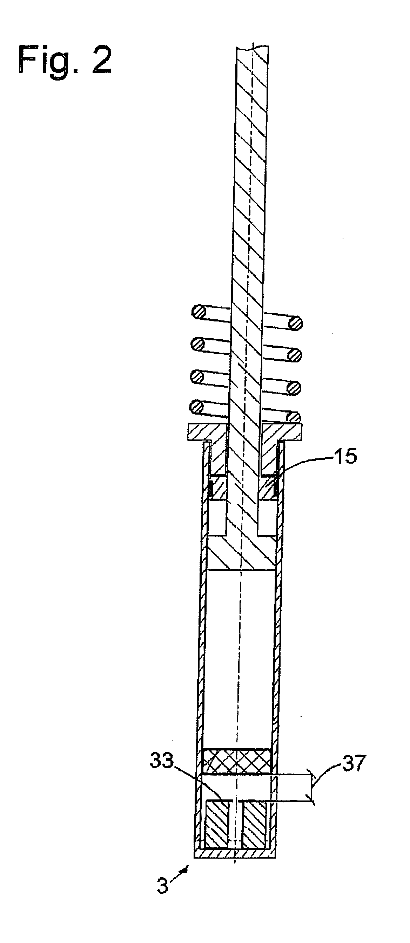

Die Figur 2 zeigt das Federbein 1 in einer Hublage innerhalb eines Normalbereichs, z. B. im Bereich der angestrebten Niveaulage eines Fahrzeugaufbaus. Bei einer Einfederungsbewegung wird das Dämpfmedium aus dem verdrängerstangenfernen Arbeitsraum 13 in den verdrängerstangenseitigen Arbeitsraum 11 umgepumpt, beispielsweise, durch nicht dargstellte Dämpfventile im Kolben 9, wenn keine Dämpfwirkung erforderlich ist, dann kann auf einen Kolben 9 verzichtet werden. Dabei stützt sich der Trennkolben 19 auf dem Gaspolster im Ausgleichsraum 21 ab. An der Verdrängerstangenführung 15 wird durch die Tragfeder über den Federteller 27 in Richtung des Bodens 17 eine Einschubkraft hervorgerufen. Eine gezielte Abstimmung des Druckniveaus im Ausgleichsraum 21 sorgt für eine Abstützung der Verdrängerstangenführung in der dargestellten Position. Alternativ kann sich die Verdrängerstangenführung 15 an einer Anschlagfläche des Zylinders 5 gegen eine Einschubbewegung oder der Federteller kann sich an der Stirnfläche des Zylinders 5 abstützen.

Wenn eine definierte Einfahrposition der Verdrängerstange 7 (Fig. 1) erreicht ist, dann ist ein vorbestimmter Abstand 37 zwischen dem Trennkolben 19 und dem Anschlag 33 im Ausgleichsraum 21 aufgezerrt, d. h. eine weitere axiale Verschiebebewegung des Trennkolbens 19 wird von dem Anschlag 33 blockiert. Der Anschlag 33 im Ausgleichsraum 21 kann ggf. in seinem Einsatzpunkt verstellbar sein, z. B. mittels einer nicht dargestellten Einstellschraube, die durch den Boden 17 nach außen führt.

Bei Fortführung der Einfahrbewegung der Verdrängerstange wird das Dämpfmedium aus dem verdrängerstangenfernen Arbeitsraum 13 dafür verwendet, die Verdrängerstangenführung 15 entgegen der Kraft der Tragfeder 29 zu verschieben und damit den nicht dargestellten Fahrzeugaufbau abzustützen, wie in der Figur 1 schematisch dargestellt ist.

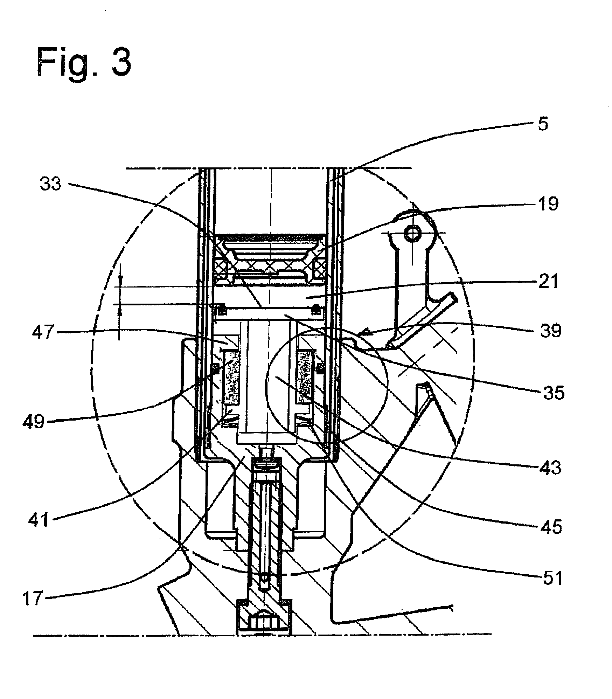

Je nach Größe des in dem Federbein 1 enthaltenen Dämpfmediumvolumens und/oder dem Perfektionierungsgrad des Federbeins 1 kann der Anschlag 33 mit einem Ausgleichselement 39 zusammenwirken, das den Einsatzpunkt des Anschlags verstellt. Die Fig. 3 zeigt eine mögliche Ausführungsform bei der der Anschlag 33 von einem axial beweglichen T-förmigen Bauteil gebildet wird, das in das Ausgleichselement 39 eintaucht. Das T-förmige Bauteil verfügt über eine ringförmige Mitnahmefläche 41 an einem bolzenförmigen Fortsatz 43 innerhalb des Ausgleichselements, In einer ringförmigen Aufnahme 45 mit einem kreisringförmigen Boden 47 ist ein Dehnungskörper 49 angeordnet, der sich einerseits an dem Boden 47 und anderseits an der Mitnahmefläche 41 abstützt. Bei einer Erwärmung des Dehnungskörpers 49 verschiebt sich das T-förmige Bauteil bzw. der Anschlag 33 axial gegen eine Federkraft einer Haltefeder 51 in Richtung des Bodens 17 des Zylinders. Alternativ kann man auch den Dehnungskörper 49 und die ringförmige Aufnahme 45 weglassen und stattdessen die Haltefeder 51 als Bimetallfeder ausführen, wobei sich die Schirmung der Bimetallfeder bei höheren Temperaturen so verändert, dass der Anschlag 33 bedarfsgerecht verschoben wird.

### Bezugszeichenliste

- 1: Federbein
- 3: Schwingungsdämpfer
- 5: Zylinder
- 7: Verdrängerstange
- 9: Kolben
- 11: verdrängerstangenseitigen Arbeitsraum
- 13: verdrängerstangenfernen Arbeitsraum
- 15: Verdrängerstangenführung
- 17: Boden
- 19: Trennkolben
- 21: Ausgleichsraum
- 23: Gleitring
- 25: Deckfläche
- 27: Federteller
- 29: Tragfeder
- 31: Führungshülse
- 33: Anschlag
- 35: Anschlagkörper
- 37: Abstand
- 39: Ausgleichselement
- 41: Mitnahmefläche
- 43: bolzenförmiger Fortsatz
- 45: Aufnahme
- 47: Boden
- 49: Dehnungskörper
- 51: Haltefeder

## Patentansprüche

1. Federbein (1), umfassend einen Schwingungsdämpfer (3), der einen Zylinder (5) umfasst, in dem eine Verdrängerstange (7) axial beweglich angeordnet ist, wobei mindestens ein Arbeitsraum (11; 13) des Zylinders (5) von einem Ausgleichsraum (21) zur Kompensation des bei einer Bewegung der Verdrängerstange (7) verdrängten Dämpfmediumvolumens durch einen beweglichen Trennkolben (19) voneinander getrennt ist, wobei die Verdrängerstange (7), radial gehalten von einer Verdrängerstangenführung (15), mit einer Tragfeder (29) in Wirkverbindung steht, die sich zumindest ab einer definierten Einfahrstellung der Verdrängerstange (7) auf einer Anschlagfläche (33) des Schwingungsdämpfers (3) abstützt,
**dadurch gekennzeichnet,**
**dass** die Verdrängerstangenführung (15) axial beweglich innerhalb des Zylinders (5) gelagert und ab einer definierten Ein fahrstellung der Verdrängerstange (7) die Bewegung des Trennkolbens (19) blockiert ist, so dass ab der definierten Ein fahrstellung das von der Verdrängerstange (7) verdrängte Dämpfmedium eine Axialverschiebung der Verdrängerstangenführung (15) bewirkt, wodurch die Anschlagfläche (33) für die Tragfeder (29) verschoben wird.

2. Federbein nach Anspruch 1,
**dadurch gekennzeichnet,**
**dass** der Trennkolben (19) auf einem Anschlag (33) zur Anlage kommt.

3. Federbein nach Anspruch 2,
**dadurch gekennzeichnet,**
**dass** der Anschlag (33) vom Zylinder (5) gebildet wird.

4. Federbein nach Anspruch 1,
**dadurch gekennzeichnet,**
**dass** die Verdrängerstangenführung (15) zur Innenwandung des Zylinders (5) mindestens einen Gleitring (23) aufweist.

5. Federbein nach Anspruch 1,
**dadurch gekennzeichnet,**
**dass** der Anschlag (33) in seinem Einsatzpunkt einstellbar ist.

6. Federbein nach einem der Ansprüche 1 bis 5,
**dadurch gekennzeichnet,**
**dass** der Anschlag (33) mit einem thermischen Ausgleichselement (39) zusammenwirkt, das den Einsatzpunkt des Anschlags (33) verstellt.

7. Federbein nach Anspruch 6,
**dadurch gekennzeichnet,**
**dass** das Ausgleichselement (39) von einer Aufnahme (45) für einen Dehnungskörper (49) gebildet wird, wobei sich der Dehnungskörper (49) auf einer Mitnahmefiäche (41) des Anschlags (33) abstützt und eine Federkraft der Verschiebebewegung des Anschlags (33) entgegengerichtet ist.

8. Federbein nach Anspruch 6,
**dadurch gekennzeichnet,**
**dass** als Ausgleichselement von einer Bimetallfeder gebildet wird, auf der sich der Anschlag (33) abstützt.

## Claims

1. Suspension strut (1), comprising a vibration damper (3) which comprises a cylinder (5), in which a displacement rod (7) is arranged axially movably, at least one working space (11; 13) of the cylinder (5) being separated by a movable separating piston (19) from a compensation space (21) for compensating for the damping medium volume which is displaced during a movement of the displacement rod (7), the displacement rod (7), held radially by a displacement rod guide (15), being operatively connected to a bearing spring (29) which is supported on a stop face (33) of the vibration damper (3) at least from a defined moved-in position of the displacement rod (7), **characterized in that** the displacement rod guide (15) is mounted such that it can be moved axially inside the cylinder (5) and the movement of the separating piston (19) is blocked from a defined moved-in position of the displacement rod (7), with the result that, from the defined moved-in position, the damping medium which is displaced by the displacement rod (7) brings about an axial displacement of the displacement rod guide (15), as a result of which the stop face (33) for the bearing spring (29) is displaced.

2. Suspension strut according to Claim 1, **characterized in that** the separating piston (19) comes into contact on a stop (33).

3. Suspension strut according to Claim 2, **characterized in that** the stop (33) is formed by the cylinder (5).

4. Suspension strut according to Claim 1, **characterized in that** the displacement rod guide (15) has at least one sliding ring (23) towards the inner wall of the cylinder (5).

5. Suspension strut according to Claim 1, **characterized in that** the stop (33) can have its point of use adjusted.

6. Suspension strut according to one of Claims 1 to 5, **characterized in that** the stop (33) interacts with a thermal compensation element (39) which adjusts the point of use of the stop (33).

7. Suspension strut according to Claim 6, **characterized in that** the compensation element (39) is formed by a receptacle (45) for an expansion body (49), the expansion body (49) being supported on a driving face (41) of the stop (33) and a spring force being directed counter to the displacement movement of the stop (33).

8. Suspension strut according to Claim 6, **characterized in that** the compensation element is formed by a bimetal spring, on which the stop (33) is supported.

## Revendications

1. Jambe de force (1), comprenant un amortisseur de vibrations (3), qui comprend un cylindre (5) dans lequel est disposé, de manière déplaçable axialement, une tige de déplacement (7), au moins un espace de travail (11 ; 13) du cylindre (5) étant séparé d'un espace d'équilibrage (21) en vue de la compensation du volume de fluide d'amortissement refoulé lors d'un déplacement de la tige de déplacement (7) par un piston de séparation déplaçable (19), la tige de déplacement (7), retenue radialement par un guide de tige de déplacement (15), étant en liaison fonctionnelle avec un ressort de support (29) qui s'appuie au moins à partir d'une position rentrée définie de la tige de déplacement (7) sur une surface de butée (33) de l'amortisseur de vibrations (3),
**caractérisée en ce que**
le guide de tige de déplacement (15) est monté axialement de manière déplaçable à l'intérieur du cylindre (5) et à partir d'une position rentrée définie de la tige de déplacement (7), le déplacement du piston de séparation (19) est bloqué, de sorte qu'à partir de la position rentrée définie, le fluide d'amortissement déplacé par la tige de déplacement (7) provoque un déplacement axial du guide de tige de déplacement (15), de sorte que la surface de butée (33) pour le ressort de support (29) est déplacée.

2. Jambe de force selon la revendication 1,
**caractérisée en ce que**
le piston de séparation (19) vient en appui sur une butée (33).

3. Jambe de force selon la revendication 2,
**caractérisée en ce que**
la butée (33) est formée par le cylindre (5).

4. Jambe de force selon la revendication 1,
**caractérisée en ce que**
le guide de tige de déplacement (15) vers la paroi interne du cylindre (5) présente au moins une bague de glissement (23).

5. Jambe de force selon la revendication 1,
**caractérisée en ce que**
la butée (33) peut être ajustée au niveau de son point de départ.

6. Jambe de force selon l'une quelconque des revendications 1 à 5,
**caractérisée en ce que**
la butée (33) coopère avec un élément d'équilibrage thermique (39) qui règle le point de départ de la butée (33).

7. Jambe de force selon la revendication 6,
**caractérisée en ce que**
l'élément d'équilibrage (39) est formé par un logement (45) pour un corps de dilatation (49), le corps de dilatation (49) s'appuyant sur une surface d'entraînement (41) de la butée (33) et une force de ressort s'opposant au mouvement de déplacement de la butée (33).

8. Jambe de force selon la revendication 6,
**caractérisée en ce que**
l'élément d'équilibrage est formé par un ressort bimétallique, sur lequel s'appuie la butée (33).
